# EUROPÄISCHE PATENTSCHRIFT

(11) **EP 4 077 124 B1**
(45) Veröffentlichungstag und Bekanntmachung des Hinweises auf die Patenterteilung: **04.02.2026**
(21) Anmeldenummer: 20835730.1
(22) Anmeldetag: 15.12.2020
(51) Int. Cl.: B63H 23/10, B63H 21/20, B63H 23/16

(54) **ANTRIEB FÜR EIN FAHRZEUG, WASSERFAHRZEUG MIT EINEM SOLCHEN ANTRIEB, VERFAHREN ZUM BETREIBEN EINES WASSERFAHRZEUGS, SOWIE STEUERGERÄT FÜR EIN SOLCHES WASSERFAHRZEUG**
DRIVE FOR A VEHICLE, WATERCRAFT HAVING A DRIVE OF THIS TYPE, METHOD FOR OPERATING A WATERCRAFT, AND CONTROL DEVICE FOR A WATERCRAFT OF THIS TYPE
ENTRAÎNEMENT CONÇU POUR UN VÉHICULE, VÉHICULE AQUATIQUE ÉQUIPÉ D'UN TEL ENTRAÎNEMENT, PROCÉDÉ POUR FAIRE FONCTIONNER UN VÉHICULE AQUATIQUE ET APPAREIL DE COMMANDE POUR UN TEL VÉHICULE AQUATIQUE

(30) Priorität: 16.12.2019 DE 102019219770
(43) Veröffentlichungstag der Anmeldung: 26.10.2022
(73) Patentinhaber: Rolls-Royce Solutions GmbH, 88045 Friedrichshafen (DE)
(72) Erfinder: BOYDE, Jan, 88048 Friedrichshafen (DE); FACKLER, Marcus, 88212 Ravensburg (DE); DITTMANN, Mario, 88046 Friedrichshafen (DE)
(74) Vertreter: Kordel, Mattias
(86) Internationale Anmeldenummer: PCT/EP2020/086271
(87) Internationale Veröffentlichungsnummer: WO 2021/122634

(56) Entgegenhaltungen:
- WO-A2-2007/138353
- FR-A1- 2 940 868
- US-A1- 2010 203 777

## Beschreibung

Die Erfindung betrifft einen Antrieb für ein Fahrzeug, ein Wasserfahrzeug mit einem solchen Antrieb, ein Verfahren zum Betreiben eines solchen Wasserfahrzeugs, sowie ein Steuergerät für ein solches Wasserfahrzeug.

Bei Fahrzeugen, insbesondere bei Wasserfahrzeugen, besteht grundsätzlich das Problem, diese schnell und mit möglichst kurzem Verzögerungsweg, insbesondere aus voller Fahrt, zu verzögern. Insbesondere soll ein solches Wasserfahrzeug innerhalb möglichst kurzer Zeit und Distanz gestoppt werden können, um Kollisionen nach Möglichkeit zu vermeiden. Dabei besteht allgemein das Bedürfnis, das Verzögerungsverhalten zu verbessern.

Der Erfindung liegt die Aufgabe zugrunde, einen Antrieb für ein Fahrzeug, ein Wasserfahrzeug mit einem solchen Antrieb, ein Verfahren zum Betreiben eines Wasserfahrzeugs, sowie ein Steuergerät für ein solches Wasserfahrzeug zu schaffen, wobei die genannten Ziele zumindest teilweise erreicht, vorzugsweise erreicht sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Antrieb, insbesondere ein motorischer Antrieb, für ein Fahrzeug, insbesondere für ein Wasserfahrzeug, geschaffen wird, der eine Brennkraftmaschine und eine Freilaufeinrichtung aufweist. Die Brennkraftmaschine ist über die Freilaufeinrichtung mit einer Antriebswelle des Antriebs antriebswirkverbindbar, insbesondere antriebswirkverbunden. Die Freilaufeinrichtung ist dabei eingerichtet, um die Brennkraftmaschine von der Antriebswelle abzukoppeln, das heißt die Antriebswirkverbindung zu trennen, wenn eine der Drehzahl der Antriebswelle eine Drehzahl der Brennkraftmaschine übersteigt. Dass die Brennkraftmaschine über die Freilaufeinrichtung mit der Antriebswelle antriebswirkverbindbar ist, bedeutet dabei insbesondere, dass die Antriebswirkverbindung zwischen der Brennkraftmaschine und der Antriebswelle durch die Freilaufeinrichtung geschlossen und getrennt werden kann. Insbesondere ist die Brennkraftmaschine durch die Freilaufeinrichtung von der Antriebswelle abkoppelbar.

Bei dieser Ausgestaltung ergibt sich insbesondere bei Einsatz des Antriebs in einem Fahrzeug, insbesondere Wasserfahrzeug, dass beispielsweise in einer Betriebssituation des Fahrzeugs, in der von einer Vorausfahrt ausgehend die Drehrichtung einer mit der Antriebswelle antriebswirkverbundenen Propellerwelle umgekehrt werden soll, beispielsweise um das Fahrzeug zu verzögern, die Brennkraftmaschine im Leerlauf betrieben oder abgeschaltet ist oder wird, um eine Drehzahl der Propellerwelle, im Folgenden auch als Propellerwellendrehzahl bezeichnet, zunächst durch die angreifenden Wasserkräfte zu reduzieren, bevor die Propellerwelle dann mit entgegengesetzter Drehrichtung angetrieben wird. In diesem Fall, während der Reduktion der Propellerwellendrehzahl, übersteigt eine der Propellerwelle zugeordnete Drehzahl - das heißt hier insbesondere die Drehzahl der Antriebswelle - die Drehzahl der Brennkraftmaschine, sodass die Brennkraftmaschine von der Propellerwelle entkoppelt ist.

Es ist nun vorgesehen, dass der Antrieb eine Überbrückungseinrichtung aufweist, die eingerichtet ist, um die Brennkraftmaschine in zumindest einer Betriebssituation des Antriebs, insbesondere in zumindest einer Betriebssituation des Fahrzeugs, mit der Antriebswelle zu koppeln, wenn die Brennkraftmaschine durch die Freilaufeinrichtung von der Antriebswelle getrennt ist. Insbesondere ist die Übertragungseinrichtung bei einem Einsatz in einem Wasserfahrzeug eingerichtet, um die Brennkraftmaschine in zumindest einer Betriebssituation des Wasserfahrzeugs mit der Propellerwelle zu koppeln, wenn die Brennkraftmaschine durch die Freilaufeinrichtung von der Propellerwelle getrennt ist.

Somit ist es nun insbesondere vorteilhaft möglich, mittels der Überbrückungseinrichtung die Brennkraftmaschine auch in einer Betriebssituation mit der Antriebswelle zu koppeln, in welcher die Drehzahl der Antriebswelle die Drehzahl der Brennkraftmaschine übersteigt. Dies kann in einem Fahrzeug insbesondere genutzt werden, um die Antriebswellendrehzahl, insbesondere bei einem Wasserfahrzeug die Propellerwellendrehzahl, schneller zu reduzieren, insbesondere wenn von einer ersten Drehrichtung auf eine zweite, entgegengesetzte Drehrichtung der Propellerwelle umgesteuert werden soll, wobei dann die Propellerwelle die Brennkraftmaschine schleppt. Es wird somit vorteilhaft ein deren Drehzahl reduzierendes Drehmoment von der Brennkraftmaschine in die Antriebswelle, insbesondere Propellerwelle, eingeleitet. Somit erlaubt die hier vorgeschlagene Ausgestaltung ein schnelleres Verzögern des Fahrzeugs, insbesondere da rascher von einer Drehrichtung der Propellerwelle auf die entgegengesetzte andere Drehrichtung umgeschaltet werden kann, um dann das Fahrzeug aktiv zu verzögern. Auf diese Weise werden insbesondere die Zeit und die Distanz für ein Stoppen des Fahrzeugs verringert, sodass Kollisionen besser vermieden werden können.

Die Antriebswelle ist insbesondere eine Ausgangs- oder Abtriebswelle des Antriebs, das heißt insbesondere eine Welle, an der die mechanische Leistung des Antriebs abgenommen werden kann oder an der der Antrieb mechanische Leistung zur Abnahme zur Verfügung stellt.

Unter einer Freilaufeinrichtung wird allgemein eine Einrichtung verstanden, die eine Entkopplung der Antriebswelle von der Brennkraftmaschine ermöglicht, wenn die Drehzahl der Antriebswelle die Drehzahl der Brennkraftmaschine übersteigt. Die Freilaufeinrichtung muss dabei nicht zwingend als mechanischer Freilauf ausgebildet sein, vielmehr genügt es zur Verwirklichung der Freilaufeinrichtung, dass diese die entsprechende Funktion bereitstellt, unabhängig von der konkreten Ausgestaltung der Bereitstellung dieser Funktion. Die Freilaufeinrichtung wirkt aus Sicht der Brennkraftmaschine wie ein Überholgetriebe: Sobald die Drehzahl der Brennkraftmaschine geringer ist als die Drehzahl der Antriebswelle, befindet sich die Brennkraftmaschine im Freilauf.

Die Überbrückungseinrichtung ist insbesondere eingerichtet, um die Freilaufeinrichtung zu überbrücken. Dies bedeutet insbesondere, dass die Überbrückungseinrichtung die Brennkraftmaschine dann mit der Antriebswelle koppeln kann, wenn die Brennkraftmaschine durch die Freilaufeinrichtung eigentlich von der Antriebswelle entkoppelt ist. Der Antrieb weist die Überbrückungseinrichtung insbesondere zusätzlich zu der Freilaufeinrichtung auf, das heißt insbesondere ist die Überbrückungseinrichtung nicht mit der Freilaufeinrichtung identisch. Gemäß einer bevorzugten Ausgestaltung weist der Antrieb die Überbrückungseinrichtung separat von der Freilaufeinrichtung auf.

Die zumindest eine Betriebssituation des Antriebs, insbesondere des Wasserfahrzeugs, in welcher die Überbrückungseinrichtung die Brennkraftmaschine mit der Antriebswelle koppelt, ist - wie bereits ausgeführt - gemäß einer bevorzugten Ausgestaltung ein Umschalten von einer ersten Drehrichtung der Propellerwelle des Wasserfahrzeugs zu einer zweiten Drehrichtung der Propellerwelle, insbesondere ein Umstellen von einer Vorwärtsfahrt zu einer Rückwärtsfahrt - oder umgekehrt -, bevorzugt insbesondere ein Umschalten von einem Volle-Kraft-Voraus-Betriebszustand zu einem Volle-Kraft-Zurück-Betriebszustand - oder umgekehrt -, oder aber ein Umschalten von einem beliebigen Betriebszustand bezüglich einer Fahrt in eine bestimmte Richtung in einen Volle-Kraft-Betriebszustand bezüglich einer Fahrt in die entgegengesetzte Richtung, beispielsweise von einer Vorausfahrt - unabhängig davon, ob diese antriebslos, mit viertel Kraft, mit halber Kraft oder mit voller Kraft erfolgt - zu einer Rückfahrt mit voller Kraft zurück.

Besonders bevorzugt ist die wenigstens eine Betriebssituation eine Bremssituation des Fahrzeugs, insbesondere des Wasserfahrzeugs, in welcher das Fahrzeug - bevorzugt mit maximaler Leistung - verzögert werden soll. In besonders bevorzugter Ausgestaltung ist die wenigstens eine Betriebssituation eine Notstopp-Situation, in welcher das Fahrzeug aufgrund einer Gefahrenlage in kürzester Zeit und über kürzeste Distanz angehalten werden soll.

Dass ein Element mit einem anderen Element antriebswirkverbindbar oder antriebswirkverbunden ist, bedeutet insbesondere, dass zwischen dem einen Element und dem anderen Element eine drehmomentübertragende Verbindung ausbildbar oder ausgebildet ist.

Gemäß einer Weiterbildung der Erfindung ist vorgesehen, dass der Antrieb zusätzlich eine elektrische Maschine aufweist, wobei die Brennkraftmaschine und die elektrische Maschine über die Freilaufeinrichtung mit der Antriebswelle antriebswirkverbindbar sind, derart, dass nur die Brennkraftmaschine, nur die elektrische Maschine, oder die Brennkraftmaschine und die elektrische Maschine gemeinsam die Antriebswelle antreiben können. Insbesondere ist der Antrieb bevorzugt so ausgebildet, dass in einem ersten Betriebszustand des Antriebs nur die Brennkraftmaschine, in einem zweiten Betriebszustand des Antriebs nur die elektrische Maschine, und in einem dritten Betriebszustand des Antriebs die Brennkraftmaschine und die elektrische Maschine gemeinsam die Antriebswelle antreiben können. Der Antrieb ist bevorzugt als Hybridantrieb ausgebildet. Insbesondere wirken die Brennkraftmaschine und die elektrische Maschine auf dieselbe Antriebswelle, insbesondere auf dieselbe Propellerwelle des Wasserfahrzeugs.

Die Freilaufeinrichtung ist insbesondere eingerichtet, um die Brennkraftmaschine von der Antriebswelle abzukoppeln, wenn die Drehzahl der von der elektrischen Maschine angetriebenen Antriebswelle die Drehzahl der Brennkraftmaschine übersteigt. Somit wird vorteilhaft die Funktionalität verwirklicht, dass die Brennkraftmaschine dann von der Antriebswelle entkoppelt wird, wenn die Antriebslast primär von der elektrischen Maschine aufgebracht wird.

Vorzugsweise wird in der zumindest einen Betriebssituation, in welcher die Brennkraftmaschine über die Überbrückungseinrichtung mit der Antriebswelle gekoppelt ist, die elektrische Maschine angesteuert, um die Drehzahl der Antriebswelle aktiv zu verzögern.

Ein Hybridantrieb ermöglicht besondere Arten der Verzögerung für das Fahrzeug. Durch das Vorhandensein zweier Antriebsarten, nämlich der Brennkraftmaschine einerseits und der elektrischen Maschine andererseits, können die Vorteile beider Antriebsarten kombiniert werden. Vor allem das bei geringen Drehzahlen hohe Drehmoment der elektrischen Maschine ermöglicht ein deutlich effizienteres Abbremsen als mittels der Brennkraftmaschine alleine. Die hier vorgeschlagene Ausgestaltung nutzt das Potential beider Antriebsarten für einen bestmöglichen Bremsvorgang.

Vorzugsweise weist der Antrieb eine elektrische Speichereinrichtung auf, die eingerichtet ist, um wahlweise elektrische Energie zu speichern oder abzugeben. Die elektrische Speichereinrichtung ist bevorzugt mit der elektrischen Maschine wirkverbunden, um - je nach Betriebszustand des Antriebs, insbesondere je nach Betriebszustand des Fahrzeugs - durch die als Generator betriebene elektrische Maschine in elektrische Energie gewandelte kinetische Energie des Fahrzeugs zu speichern, das heißt insbesondere rekuperierte Energie zu speichern, oder gespeicherte Energie für den Betrieb der elektrischen Maschine als Motor zu nutzen.

Gemäß einer Weiterbildung der Erfindung ist vorgesehen, dass die Freilaufeinrichtung als mechanischer Freilauf ausgebildet ist. Dies stellt eine besonders einfache Ausgestaltung der Freilaufeinrichtung dar.

Alternativ ist bevorzugt vorgesehen, dass die Freilaufeinrichtung als Getriebeeinrichtung oder als Teil einer Getriebeeinrichtung ausgebildet ist. Dies stellt eine komplexere Ausgestaltung der Freilaufeinrichtung dar, welche vorteilhaft eine Verwirklichung einer größeren Zahl von Betriebszuständen ermöglicht. Insbesondere kann die Freilaufeinrichtung als Planetengetriebe ausgebildet sein. Vorzugsweise sind mit dem Planetengetriebe zwei elektrische Motoren wirkverbunden. Bei dieser Konstellation, bei der die Brennkraftmaschine und zwei elektrische Maschinen mit einem Planetengetriebe zusammenwirken, können besonders vielfältige Betriebszustände verwirklicht werden.

Insbesondere kann die Freilaufeinrichtung als Zwischengetriebe oder als Teil eines Zwischengetriebes ausgebildet, oder vor einem Zwischengetriebe - eingangsseitig, auf Seiten der Brennkraftmaschine - angeordnet sein.

Gemäß einer Weiterbildung der Erfindung ist vorgesehen, dass die Überbrückungseinrichtung an der Freilaufeinrichtung angeordnet ist. Alternativ ist bevorzugt vorgesehen, dass die Überbrückungseinrichtung in die Freilaufeinrichtung integriert ist. Alternativ ist bevorzugt vorgesehen, dass die Überbrückungseinrichtung parallel zu der Freilaufeinrichtung angeordnet ist. Jede dieser Alternativen erlaubt eine besonders kompakte und zugleich effektive Anordnung der Überbrückungseinrichtung innerhalb des Antriebs.

Gemäß einer Weiterbildung der Erfindung ist vorgesehen, dass die Überbrückungseinrichtung als Kupplung ausgebildet ist. Dies stellt eine besonders einfache wie effektive Ausgestaltung der Überbrückungseinrichtung dar. In bevorzugter Ausgestaltung ist die Überbrückungseinrichtung als Magnetkupplung ausgebildet. Dies stellt eine ebenso einfache wie funktionssichere Ausgestaltung der Überbrückungseinrichtung dar.

Die Aufgabe wird auch gelöst, indem ein Wasserfahrzeug geschaffen wird, das einen erfindungsgemäßen Antrieb oder einen Antrieb nach einem der zuvor beschriebenen Ausführungsbeispiele aufweist, wobei die Antriebswelle eine Propellerwelle des Wasserfahrzeugs ist, oder wobei die Antriebswelle mit der Propellerwelle des Wasserfahrzeugs antriebswirkverbindbar oder antriebswirkverbunden ist. In Zusammenhang mit dem Wasserfahrzeug ergeben sich insbesondere die zuvor bereits in Zusammenhang mit dem Antrieb erläuterten Vorteile.

Insbesondere wird ein Wasserfahrzeug bevorzugt, bei dem die Brennkraftmaschine des Antriebs über die Freilaufeinrichtung mit der Propellerwelle antriebswirkverbindbar ist. Die Freilaufeinrichtung ist eingerichtet, um die Brennkraftmaschine von der Propellerwelle abzukoppeln, wenn eine der Propellerwelle zugeordnete Drehzahl die Drehzahl der Brennkraftmaschine übersteigt. Die Überbrückungseinrichtung ist eingerichtet, um die Brennkraftmaschine in zumindest einer Betriebssituation des Wasserfahrzeugs mit der Propellerwelle zu koppeln, wenn die Brennkraftmaschine durch die Freilaufeinrichtung von der Propellerwelle getrennt ist.

Unter einem Wasserfahrzeug ist insbesondere ein Fahrzeug zu verstehen, welches zur Fortbewegung auf dem Wasser oder im Wasser bestimmt ist. Insbesondere weist das Wasserfahrzeug den Antrieb als eigenen Antrieb auf, ist also selbstfahrend ausgebildet. Ein solches Wasserfahrzeug ist in bevorzugter Ausgestaltung insbesondere ein Schiff, ein Boot oder ein Floß. Das Wasserfahrzeug kann aber auch ein Amphibienfahrzeug, ein Wassermotorrad, ein Aquascooter oder dergleichen sein. In besonders bevorzugter Ausgestaltung ist das Wasserfahrzeug eine Yacht.

Unter der der Propellerwelle zugeordneten Drehzahl ist insbesondere eine Drehzahl zu verstehen, die aus Sicht der Brennkraftmaschine für eine Winkelgeschwindigkeit der Propellerwelle charakteristisch ist und/oder mit der Winkelgeschwindigkeit der Propellerwelle eindeutig zusammenhängt. Insbesondere ist die der Propellerwelle zugeordnete Drehzahl die Drehzahl der Antriebswelle, die entweder mit der Propellerwelle - gegebenenfalls vermittelt über wenigstens ein Getriebe - antriebswirkverbunden ist, oder die mit der Propellerwelle identisch ist. Die Antriebswelle ist insbesondere eine Welle, die dann, wenn die Brennkraftmaschine über die Freilaufeinrichtung mit der Propellerwelle gekoppelt ist, dieselbe Drehzahl aufweist wie die Brennkraftmaschine. Ist die Antriebswelle über wenigstens ein Getriebe mit der Propellerwelle verbunden, ist es möglich, dass die Drehzahl der Antriebswelle und damit zugleich die der Propellerwelle zugeordnete Drehzahl von der auch als Propellerwellendrehzahl bezeichneten Drehzahl der Propellerwelle abweicht, wobei die Abweichung durch das wenigstens eine Getriebe bestimmt ist. Ist dagegen die Antriebswelle mit der Propellerwelle identisch, und somit die Brennkraftmaschine im gekoppelten Zustand unmittelbar mit der Propellerwelle gekoppelt, ist die der Propellerwelle zugeordnete Drehzahl identisch mit der Drehzahl der Propellerwelle und damit zugleich der Antriebswelle; das heißt die der Propellerwelle zugeordnete Drehzahl ist in diesem Fall die Propellerwellendrehzahl.

Die Propellerwelle ist bevorzugt mit einem Propeller des Wasserfahrzeugs gekoppelt, wobei der Propeller bevorzugt drehfest mit der Propellerwelle verbunden ist.

Gemäß einer Weiterbildung der Erfindung ist vorgesehen, dass zwischen der Freilaufeinrichtung und dem Propeller des Wasserfahrzeugs ein Schaltgetriebe angeordnet ist, das eingerichtet ist, um eine Drehrichtung des Propellers relativ zu einer Drehrichtung der Brennkraftmaschine umzukehren, wenn das Schaltgetriebe geschaltet wird. Dies ermöglicht einen besonders einfachen Wechsel der Drehrichtung des Propellers, bei beibehaltener Drehrichtung der Brennkraftmaschine. Es bedarf also keines Umsteuerns der Brennkraftmaschine, um die Drehrichtung des Propellers zu ändern.

Insbesondere können mittels des Schaltgetriebes zwei Funktionszustände für das Wasserfahrzeug dargestellt werden, nämlich eine Vorwärtsfahrt und eine Rückwärtsfahrt.

Die Freilaufeinrichtung ist insbesondere dann als Zwischengetriebe oder als Teil eines Zwischengetriebes ausgebildet, wenn das Wasserfahrzeug zusätzlich ein solches Schaltgetriebe aufweist. Das Schaltgetriebe ist bevorzugt zwischen der Freilaufeinrichtung, insbesondere dem Zwischengetriebe, einerseits und dem Propeller andererseits angeordnet.

Vorzugsweise ist eine Schaltkupplung zwischen der Freilaufeinrichtung und dem Schaltgetriebe, insbesondere zwischen dem Zwischengetriebe und dem Schaltgetriebe, vorgesehen. Durch diese Schaltkupplung können vorzugsweise die Brennkraftmaschine und die elektrische Maschine von dem Schaltgetriebe und damit zugleich auch von dem Propeller entkoppelt werden, wodurch es besonders schonend und rasch möglich ist, das Schaltgetriebe umzuschalten.

Die Antriebswelle ist vorzugsweise eine Getriebeeingangswelle des Schaltgetriebes. Alternativ ist die Antriebswelle bevorzugt eine Eingangswelle der Schaltkupplung. Der Begriff "Eingang" bezieht sich dabei stets auf eine der Brennkraftmaschine zugewandte Seite. Entsprechend wird eine dem Propeller zugewandte Seite als "Ausgang" bezeichnet.

Vorzugsweise weist das Wasserfahrzeug zwei Propellerwellen sowie zwei - vorzugsweise gleich, insbesondere identisch ausgebildete erfindungsgemäße Antriebe oder Antriebe nach einem der zuvor beschriebenen Ausführungsbeispiele auf, wobei jeder Propellerwelle jeweils ein separater Antrieb zugeordnet ist. Es ist auch möglich, dass das Wasserfahrzeug mehr als zwei Propellerwellen sowie mehr als zwei - insbesondere gleiche - Antriebe aufweist. Insbesondere bei größeren oder leistungsstärkeren Wasserfahrzeugen ist es vorteilhaft, wenn diese mehr als eine Propellerwelle sowie mehr als einen Antrieb aufweisen.

Die Aufgabe wird auch gelöst, indem ein Verfahren zum Betreiben eines erfindungsgemäßen Wasserfahrzeugs oder eines Wasserfahrzeugs nach einem der zuvor beschriebenen Ausführungsbeispiele geschaffen wird, wobei bei einem Bremsmanöver zum Reduzieren der Propellerwellendrehzahl die Überbrückungseinrichtung geschlossen wird, sodass die Brennkraftmaschine mit der Propellerwelle gekoppelt und durch die Propellerwelle geschleppt wird. Im Rahmen des Verfahrens verwirklichen sich insbesondere die Vorteile, die bereits in Zusammenhang mit dem Antrieb und dem Wasserfahrzeug erläutert wurden.

Das Bremsmanöver ist bevorzugt ein Notstoppmanöver. Bevorzugt wird im Zuge des Bremsmanövers - insbesondere nach dem Reduzieren der Propellerwellendrehzahl -, der Antrieb auf volle Kraft in die der vorherigen Fahrtrichtung entgegengesetzte Fahrtrichtung, beispielsweise volle Kraft zurück bei vorhergehender Vorausfahrt - oder umgekehrt, betrieben.

Gemäß einer Weiterbildung der Erfindung ist vorgesehen, dass das Wasserfahrzeug vor dem Bremsmanöver nur durch die Brennkraftmaschine alleine, oder durch die elektrische Maschine und die Brennkraftmaschine gemeinsam angetrieben wird, wobei für das Bremsmanöver folgende Schritte durchgeführt werden: Es wird a) eine Brennstoffzufuhr für die Brennkraftmaschine beendet; es wird b) die - insbesondere zuvor geöffnete - Überbrückungseinrichtung geschlossen; und es wird c) die elektrische Maschine zum Reduzieren der Propellerwellendrehzahl angesteuert, vorzugsweise mit maximaler Leistung. Dies bedeutet insbesondere, dass die elektrische Maschine derart angesteuert wird, dass die Propellerwellendrehzahl aufgrund der Ansteuerung der elektrischen Maschine reduziert wird. Mittels der hier beschriebenen Vorgehensweise kann die Propellerwellendrehzahl besonders effizient und schnell reduziert werden, wodurch das Bremsmanöver beschleunigt durchgeführt werden kann, wobei Zeit und Distanz bis zu einer Gefahrenstelle, insbesondere einer etwaigen Kollision, verkürzt werden.

Die Brennkraftmaschine weist insbesondere wenigstens einen Brennraum auf. Dass die Brennstoffzufuhr für die Brennkraftmaschine beendet wird, bedeutet insbesondere, dass dem wenigstens einen Brennraum der Brennkraftmaschine kein Brennstoff mehr zugeführt wird. Insbesondere wird bei einer als Dieselmotor ausgebildeten Brennkraftmaschine eine Einspritzung gestoppt.

Bei der hier vorgeschlagenen Vorgehensweise werden insbesondere das Schleppmoment der Brennkraftmaschine und das Drehmoment der elektrischen Maschine - insbesondere bei maximaler Leistung - gemeinsam genutzt, um vorteilhaft die Propellerwelle besonders rasch zu bremsen.

Wird beim Reduzieren der Propellerwellendrehzahl die Leerlaufdrehzahl der Brennkraftmaschine erreicht, wird bevorzugt die Schaltkupplung geöffnet. Zugleich wird in besonders bevorzugter Ausgestaltung die Brennstoffzufuhr für die Brennkraftmaschine wieder aufgenommen, sodass diese im Leerlauf läuft. Dies dient der Vermeidung eines Zeitverzugs im Zusammenhang mit einem Neustart der Brennkraftmaschine für den folgenden, entgegengesetzten Antrieb des Propellers. Es ist zwar grundsätzlich möglich, die Brennstoffzufuhr für die Brennkraftmaschine erst nach Umschalten des Schaltgetriebes und nach Schließen der Schaltkupplung wieder aufzunehmen, dies bringt aber einen Zeitverzug mit sich, was insbesondere bei einem Notmanöver nachteilig ist. Wird die Brennstoffzufuhr für die Brennkraftmaschine bei geöffneter Schaltkupplung wieder aufgenommen, dreht bevorzugt auch die elektrische Maschine ohne Leistungsabgabe mit der Leerlaufdrehzahl der Brennkraftmaschine.

Es wird nun bevorzugt das Schaltgetriebe bezüglich der Drehrichtung des Propellers umgeschaltet. Sobald dies erfolgt ist, wird bevorzugt die Schaltkupplung wieder geschlossen, und die Brennkraftmaschine sowie die elektrische Maschine beschleunigen gemeinsam mit vorzugsweise jeweils voller Leistung den Propeller in die der vorhergehenden Drehrichtung entgegengesetzte Richtung, um den Bremsvorgang zu verstärken. Insgesamt kann so eine besonders effektive Verzögerung des Wasserfahrzeugs erreicht werden.

Gemäß einer Weiterbildung der Erfindung ist in einer alternativen Ausgestaltung des Verfahrens vorgesehen, dass vor dem Bremsmanöver das Wasserfahrzeug nur durch die elektrische Maschine angetrieben wird, wobei die Brennkraftmaschine vorzugsweise gestoppt ist, das heißt die Brennstoffzufuhr zu dem wenigstens einen Brennraum - insbesondere zu allen Brennräumen - ist gestoppt; die Brennkraftmaschine läuft nicht. In diesem Betriebszustand ist die Brennkraftmaschine insbesondere durch die Freilaufeinrichtung von der Propellerwelle entkoppelt. Für das Bremsmanöver werden nun folgende Schritte durchgeführt: Die elektrische Maschine wird - insbesondere mit maximaler Leistung - a) zum Reduzieren der Propellerwellendrehzahl angesteuert. Dies bedeutet insbesondere, dass die elektrische Maschine bezüglich ihrer Drehrichtung umgesteuert wird, im Vergleich zur vorhergehenden Antriebssituation. Es wird b) die Überbrückungseinrichtung geschlossen. Daraufhin bremst auch die Brennkraftmaschine mit ihrem Reibmoment die Propellerwelle.

Unterschreitet wiederum die der Propellerwelle zugeordnete Drehzahl die Leerlaufdrehzahl der Brennkraftmaschine, wird bevorzugt die Schaltkupplung geöffnet. Vorzugsweise wird zugleich die Brennstoffzufuhr zu der Brennkraftmaschine aufgenommen, das heißt die Brennkraftmaschine gestartet, wobei diese im Leerlauf läuft. Dies dient - wie oben erläutert - bevorzugt der Vermeidung eines Zeitverzugs, insbesondere in Zusammenhang mit einem Notmanöver. Die elektrische Maschine dreht in diesem Fall auch ohne Leistungsabgabe mit der Leerlaufdrehzahl der Brennkraftmaschine mit.

Das Schaltgetriebe wird nun bevorzugt umgeschaltet, und sobald dieser Vorgang beendet ist, wird die Schaltkupplung geschlossen. Die Brennkraftmaschine und die elektrische Maschine beschleunigen nun wiederum gemeinsam - vorzugsweise jeweils mit maximaler Leistung - den Propeller in die der vorhergehenden Drehrichtung entgegengesetzte Drehrichtung, um den Bremsvorgang zu verstärken.

Die Aufgabe wird auch gelöst, indem ein Steuergerät für ein Wasserfahrzeug geschaffen wird, das eingerichtet ist, um ein erfindungsgemäßes Verfahren oder ein Verfahren nach einer der zuvor beschriebenen Ausführungsformen durchzuführen. In Zusammenhang mit dem Steuergerät ergeben sich insbesondere die zuvor in Zusammenhang mit dem Antrieb, dem Wasserfahrzeug und dem Verfahren beschriebenen Vorteile.

Gemäß einer Weiterbildung der Erfindung weist das Wasserfahrzeug ein erfindungsgemäßes Steuergerät oder ein Steuergerät nach einem der zuvor beschriebenen Ausführungsbeispiele auf, das mit der Überbrückungseinrichtung wirkverbunden ist.

Die Erfindung wird im Folgenden anhand der Zeichnung näher erläutert.

Dabei zeigen:
- Figur 1: eine schematische Darstellung eines Ausführungsbeispiels eines Antriebs sowie eines Ausführungsbeispiels eines Wasserfahrzeugs;
- Figur 2: eine schematische Darstellung einer ersten Ausführungsform eines Verfahrens zum Betreiben des Wasserfahrzeugs, und
- Figur 3: eine schematische Darstellung einer zweiten Ausführungsform des Verfahrens zum Betreiben des Wasserfahrzeugs.

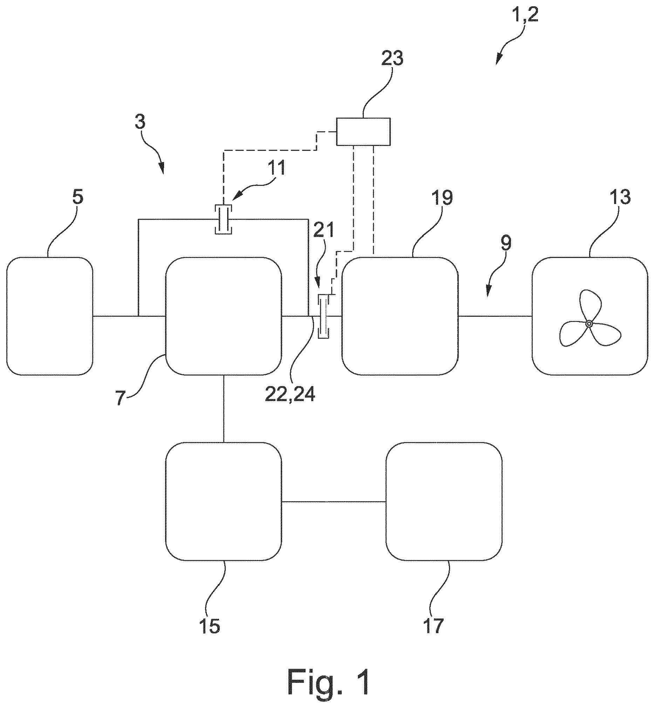

**Fig. 1** zeigt eine schematische Darstellung eines Ausführungsbeispiels Fahrzeugs 2, hier insbesondere eines Wasserfahrzeugs 1, das ein Ausführungsbeispiel eines Antriebs 3 aufweist. Der Antrieb 3 weist eine Brennkraftmaschine 5 auf, vorzugsweise einen Dieselmotor, wobei die Brennkraftmaschine 5 über eine Freilaufeinrichtung 7 mit einer Propellerwelle 9 antriebswirkverbindbar ist. Die Freilaufeinrichtung 7 ist eingerichtet, um die Brennkraftmaschine 5 von der Propellerwelle 9 abzukoppeln, wenn eine der Propellerwelle 9 zugeordnete Drehzahl eine Drehzahl der Brennkraftmaschine 5 übersteigt. Der Antrieb 1 weist außerdem eine Überbrückungseinrichtung 11 auf, die eingerichtet ist, um die Brennkraftmaschine 5 in zumindest einer Betriebssituation des Wasserfahrzeugs 1 mit der Propellerwelle 9 zu koppeln, wenn die Brennkraftmaschine 5 durch die Freilaufeinrichtung 7 von der Propellerwelle 9 getrennt ist. Dies ermöglicht in vorteilhafter Weise insbesondere, dass die Brennkraftmaschine 5 bei einem Abbremsen der Propellerwelle 9 durch die Propellerwelle 9 geschleppt werden kann, wobei das Reibmoment der Brennkraftmaschine 5 zusätzlich zum Abbremsen der Propellerwelle 9 beiträgt. Hierdurch können insbesondere Bremsmanöver, besonders bevorzugt Notstoppmanöver, des Wasserfahrzeugs 1 beschleunigt, das heißt eine Zeit und Distanz, über die das Wasserfahrzeug 1 gestoppt wird, verkürzt werden.

Mit der Propellerwelle 9 ist vorzugsweise ein Propeller 13 drehfest verbunden.

Der Antrieb 3 weist zusätzlich eine elektrische Maschine 15 auf. Die Brennkraftmaschine 5 und die elektrische Maschine 15 sind beide über die Freilaufeinrichtung 7 mit der Propellerwelle 9 antriebswirkverbindbar, nämlich derart, dass in einem ersten Betriebszustand nur die Brennkraftmaschine 5, in einem zweiten Betriebszustand nur die elektrische Maschine 15, und in einem dritten Betriebszustand die Brennkraftmaschine 5 und die elektrische Maschine 15 gemeinsam die Propellerwelle 9 antreiben können. Der Antrieb 3 ist insoweit insbesondere als Hybridantrieb ausgebildet.

Mit der elektrischen Maschine 15 ist ein elektrischer Speicher 17 wirkverbunden, insbesondere ein Akkumulator oder eine Batterie. Die elektrische Maschine 15 kann - abhängig vom jeweiligen Betriebszustand des Antriebs 3 - als Motor oder als Generator betrieben werden, wobei sie insbesondere dann, wenn sie als Motor betrieben wird, elektrische Energie aus dem elektrischen Speicher 17 bezieht, und wobei sie dann, wenn sie als Generator betrieben wird, elektrische Energie in den elektrischen Speicher 17 einspeist.

Die Freilaufeinrichtung 7 ist bevorzugt als mechanischer Freilauf, als Getriebeeinrichtung oder als Teil einer Getriebeeinrichtung ausgebildet. Insbesondere kann die Freilaufeinrichtung 7 auch als Planetengetriebe ausgebildet sein, an welcher zusätzlich eine weitere elektrische Maschine angeschlossen ist.

Zwischen der Freilaufeinrichtung 7 und dem Propeller 13 ist bevorzugt ein Schaltgetriebe 19 angeordnet, das eingerichtet ist, um eine Drehrichtung des Propellers 13 relativ zu einer Drehrichtung der Brennkraftmaschine 5 umzukehren, wenn das Schaltgetriebe 19 geschaltet wird. Insbesondere können mit dem Schaltgetriebe 19 zwei Funktionszustände verwirklicht werden, das heißt es kann zwischen zwei Funktionszuständen des Antriebs 3 gewechselt werden, nämlich zwischen einer Vorwärtsfahrt und einer Rückwärtsfahrt des Wasserfahrzeugs 1. Es ist möglich, dass das Schaltgetriebe 19 darüber hinaus eine Mehrzahl verschiedener Gänge aufweist, das heißt verschiedene Übersetzungsverhältnisse zwischen der Drehzahl insbesondere der Brennkraftmaschine 5 einerseits und der Drehzahl des Propellers 13 andererseits.

Zwischen der Freilaufeinrichtung 7 und dem Schaltgetriebe 19 ist bevorzugt eine Schaltkupplung 21 angeordnet, die eingerichtet ist, um die Freilaufeinrichtung 7 und damit zugleich insbesondere die Brennkraftmaschine 5 wahlweise mit dem Schaltgetriebe 19 zu verbinden oder von dem Schaltgetriebe 19 zu trennen. Die Schaltkupplung 21 kann insbesondere als hydraulische oder elektrische Kupplung ausgebildet sein, was eine besonders komfortable und insbesondere auch automatisierte Ansteuerung der Schaltkupplung 21 erlaubt.

Die der Propellerwelle 9 zugeordnete Drehzahl, die letztlich im Vergleich zur Drehzahl der Brennkraftmaschine 5 bestimmt, ob die Brennkraftmaschine 5 über die Freilaufeinrichtung 7 mit der Propellerwelle 9 gekoppelt ist oder nicht, ist insbesondere die Drehzahl einer Antriebswelle 22, die bei dem hier dargestellten Ausführungsbeispiel eine Eingangswelle der Schaltkupplung 21 ist. Je nach Ausgestaltung des Schaltgetriebes 19 kann diese Drehzahl der Antriebswelle 22 mit der Drehzahl der Propellerwelle 9, das heißt der Propellerwellendrehzahl, übereinstimmen. Sie kann aber auch davon abweichen, insbesondere wenn das Schaltgetriebe 19 als Über- oder Untersetzungsgetriebe ausgebildet ist. Bei einer anderen Ausgestaltung des Wasserfahrzeugs 1 ist es möglich, dass die Propellerwelle 9 insbesondere ohne zwischengeschaltetes Schaltgetriebe derart mit der Brennkraftmaschine 5 koppelbar ist, dass die Propellerwelle 9 und die Brennkraftmaschine 5 in gekoppeltem Zustand eine identische Drehzahl aufweisen. In diesem Fall ist insbesondere die Antriebswelle 22 die Propellerwelle 9, und die der Propellerwelle 9 zugeordnete Drehzahl ist unmittelbar die Propellerwellendrehzahl.

Die Freilaufeinrichtung 7 ist in einer bevorzugten Ausgestaltung als Zwischengetriebe ausgebildet.

Die Überbrückungseinrichtung 11 ist bevorzugt an der Freilaufeinrichtung 7 angeordnet oder in die Freilaufeinrichtung 7 integriert. Gemäß dem hier dargestellten Ausführungsbeispiel des Wasserfahrzeugs 1 sowie des Antriebs 3 ist allerdings die Überbrückungseinrichtung 11 parallel zu der Freilaufeinrichtung 7 angeordnet.

Bevorzugt ist die Überbrückungseinrichtung 11 als Kupplung, insbesondere als Magnetkupplung ausgebildet.

Es ist möglich, dass das Wasserfahrzeug 1 zwei insbesondere gleich ausgebildete Antriebe 3 aufweist, die bevorzugt parallel zueinander und separat voneinander vorgesehen sind, beispielsweise ein Antrieb an Backbord und ein Antrieb an Steuerbord. Entsprechend weist das Wasserfahrzeug 1 dann auch zwei Propeller 13 auf, wobei jedem Propeller 13 ein eigener, separater Antrieb 3 zugeordnet ist.

Das Wasserfahrzeug 1 weist außerdem bevorzugt ein Steuergerät 23 auf, das mit der Überbrückungseinrichtung 11 wirkverbunden und eingerichtet ist zur Durchführung eines im Folgenden näher erläuterten Verfahrens. Bevorzugt ist das Steuergerät 23 außerdem mit der Schaltkupplung 21 sowie vorzugsweise mit dem Schaltgetriebe 19 wirkverbunden. In nicht dargestellter Weise ist das Steuergerät bevorzugt zusätzlich mit der Brennkraftmaschine 5 und mit der elektrischen Maschine 15 wirkverbunden.

Bei einem Verfahren zum Betreiben des Wasserfahrzeugs 1 ist vorgesehen, dass bei einem Bremsmanöver zum Reduzieren der Propellerwellendrehzahl die Überbrückungseinrichtung 11 geschlossen wird, sodass die Brennkraftmaschine 5 mit der Propellerwelle 9 gekoppelt und durch die Propellerwelle 9 geschleppt wird. Auf diese Weise wird die Propellerwellendrehzahl besonders rasch und effektiv reduziert. Ein solches Bremsmanöver ist bevorzugt ein Notstoppmanöver.

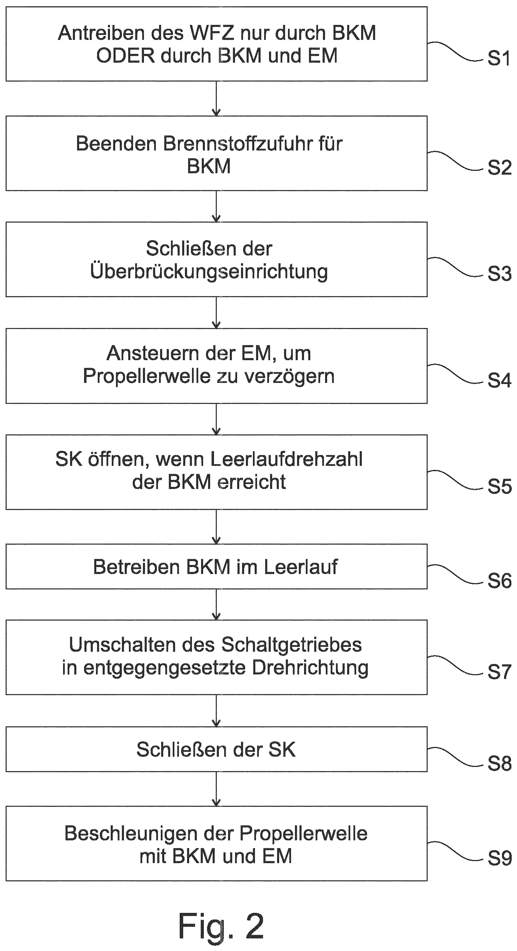

**Fig. 2** zeigt eine erste Ausführungsführungsform eines solchen Verfahrens zum Betreiben eines Wasserfahrzeugs 1.

Dabei wird das Wasserfahrzeug 1 - kurz WFZ - in einem ersten Schritt S1 vor dem Bremsmanöver entweder nur durch die Brennkraftmaschine 5 - kurz BKM - oder gemeinsam durch die Brennkraftmaschine 5 und die elektrische Maschine 15 - kurz EM - angetrieben. Um das Bremsmanöver einzuleiten, wird in einem zweiten Schritt S2 eine Brennstoffzufuhr für die Brennkraftmaschine 5 beendet, insbesondere wird eine Einspritzung für den Dieselmotor gestoppt. In einem dritten Schritt S3 wird die Überbrückungseinrichtung 11 geschlossen, sodass die Brennkraftmaschine 5 durch die Propellerwelle 9 geschleppt wird.

In einem vierten Schritt S4 wird die elektrische Maschine 15 angesteuert, um die Propellerwelle 9 zu verzögern. Je nachdem, ob die elektrische Maschine 15 zuvor für den Antrieb des Wasserfahrzeugs 1 genutzt wurde oder ob sie in Ruhe war, wird sie nun bezüglich ihrer Drehrichtung umgesteuert, oder neu angesteuert. Bevorzugt wird die elektrische Maschine 15 mit voller Leistung angesteuert, um die Propellerwelle 9 so schnell wie möglich zu verzögern, das heißt deren Drehzahl zu reduzieren. Dabei wirken nun die Brennkraftmaschine 5 und die elektrische Maschine 15 zusammen, um die Propellerwellendrehzahl zu reduzieren, wobei durch die elektrische Maschine 15 aktiv ein Drehmoment in die Propellerwelle 9 eingeleitet wird, und wobei die Brennkraftmaschine 5 passiv durch die Propellerwelle 9 geschleppt wird.

Wird eine Leerlaufdrehzahl der Brennkraftmaschine 5 erreicht, wird die Schaltkupplung 21 in einem fünften Schritt S5 geöffnet. Anschließend wird in einem sechsten Schritt S6 die Brennkraftmaschine 5 im Leerlauf betrieben.

In einem siebten Schritt S7 wird nun das Schaltgetriebe 19 in die der vorhergehenden Drehrichtung entgegengesetzte Drehrichtung umgeschaltet, beispielsweise von Vorwärtsfahrt auf Rückwärtsfahrt - oder umgekehrt.

Ist das Schaltgetriebe 19 umgeschaltet, wird die Schaltkupplung 21 in einem achten Schritt S8 geschlossen, und in einem neunten Schritt S9 wird die Propellerwelle 9 - nun in entgegengesetzter Drehrichtung - gemeinsam durch die Brennkraftmaschine 5 und die elektrische Maschine 15, vorzugsweise jeweils mit maximaler Leistung, beschleunigt. Auf diese Weise kann der Bremsvorgang für das Wasserfahrzeug 1 sehr effektiv, schnell und über eine kurze Distanz durchgeführt werden.

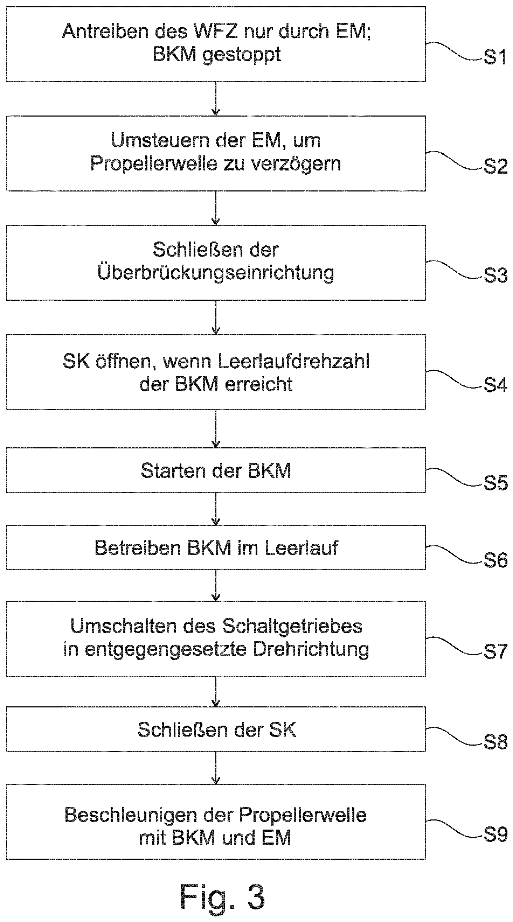

**Fig. 3** zeigt eine schematische Darstellung einer zweiten Ausführungsform des Verfahrens. In diesem Fall wird vor dem Bremsmanöver in einem ersten Schritt S1 das Wasserfahrzeug 1 nur durch die elektrische Maschine 15 angetrieben. Die Brennkraftmaschine 5 - insbesondere eine Brennstoffzufuhr zu Brennräumen, insbesondere zu allen Brennräumen der Brennkraftmaschine 5 - ist gestoppt.

Soll nun das Bremsmanöver eingeleitet werden, wird in einem zweiten Schritt S2 die elektrische Maschine 15 umgesteuert, das heißt bezüglich ihrer Drehrichtung umgeschaltet, um die Propellerwelle 9 zu verzögern. Bevorzugt wird dabei die elektrische Maschine 15 bei ihrer maximalen Leistung betrieben, um die Propellerwelle 9 möglichst schnell zu verzögern. In einem dritten Schritt S3 wird die Überbrückungseinrichtung 11 geschlossen, sodass zusätzlich die Brennkraftmaschine 5 durch die Propellerwelle 9 geschleppt wird. Dadurch wird die Propellerwellendrehzahl zusätzlich und schneller reduziert, als wenn diese allein durch die elektrische Maschine 15 verzögert würde.

Ist die Leerlaufdrehzahl der Brennkraftmaschine 5 erreicht, wird in einem vierten Schritt S4 die Schaltkupplung 21 geöffnet. In einem fünften Schritt S5 wird die Brennkraftmaschine 5 gestartet, und sie wird in einem sechsten Schritt S6 im Leerlauf betrieben.

In einem siebten Schritt S7 wird nun das Schaltgetriebe 21 in die entgegengesetzte Drehrichtung umgeschaltet. Ist dies erfolgt, wird in einem achten Schritt S8 die Schaltkupplung 21 geschlossen, und in einem neunten Schritt S9 wird die Propellerwelle - nun in entgegengesetzte Richtung - gemeinsam durch die Brennkraftmaschine 5 und die elektrische Maschine 15 - vorzugsweise jeweils mit maximaler Leistung - beschleunigt. Auch bei dieser Ausführungsform des Verfahrens kann eine besonders rasche Verzögerung des Wasserfahrzeugs 1 über eine möglichst kurze Distanz erreicht werden.

Bei der ersten Ausführungsform des Verfahrens gemäß Figur 2 können die Schritte S3 und S4 auch gleichzeitig durchgeführt werden. Auch kann der zweite Schritt S2 gleichzeitig mit dem dritten Schritt S3 und dem vierten Schritt S4 durchgeführt werden. Bei der zweiten Ausführungsform des Verfahrens gemäß Figur 3 können der zweite Schritt S2 und der dritte Schritt S3 gleichzeitig durchgeführt werden.

Wird in dem sechsten Schritt S6 gemäß beider Ausführungsformen des Verfahrens gemäß den Figuren 2 und 3 die Brennkraftmaschine 5 im Leerlauf betrieben, dreht insbesondere auch die elektrische Maschine 15 ohne Leistungsabgabe mit der Leerlaufdrehzahl der Brennkraftmaschine 5 mit, da sie mit dieser über die Freilaufeinrichtung 7, insbesondere das Zwischengetriebe, verbunden ist.

## Patentansprüche

1. Antrieb (3) für ein Fahrzeug (2), insbesondere für ein Wasserfahrzeug (1), mit einer Brennkraftmaschine (5) und einer Freilaufeinrichtung (7), wobei die Brennkraftmaschine (5) über die Freilaufeinrichtung (7) mit einer Antriebswelle (22) des Antriebs (3) antriebswirkverbindbar ist, wobei die Freilaufeinrichtung (7) eingerichtet ist, um die Brennkraftmaschine (5) von der Antriebswelle (22) abzukoppeln, wenn eine Drehzahl der Antriebswelle (22) eine Drehzahl der Brennkraftmaschine (5) übersteigt, **dadurch gekennzeichnet, dass** der Antrieb eine Überbrückungseinrichtung umfasst (11), die eingerichtet ist, um die Brennkraftmaschine (5) in zumindest einer Betriebssituation des Antriebs (3) mit der Antriebswelle (22) zu koppeln, wenn die Brennkraftmaschine (5) durch die Freilaufeinrichtung (7) von der Antriebswelle (22) getrennt ist.

2. Antrieb (3) nach Anspruch 1, **dadurch gekennzeichnet, dass** der Antrieb (3) zusätzlich eine elektrische Maschine (15) aufweist, wobei die Brennkraftmaschine (5) und die elektrische Maschine (15) über die Freilaufeinrichtung (7) derart mit der Antriebswelle (22) antriebswirkverbindbar sind, dass nur die Brennkraftmaschine (5), nur die elektrische Maschine (15), oder die Brennkraftmaschine (5) und die elektrische Maschine (15) gemeinsam, die Antriebswelle (22) antreiben können.

3. Antrieb (3) nach einem der vorhergehenden Ansprüche, **dadurch gekennzeichnet, dass** die Freilaufeinrichtung (7)
a) als mechanischer Freilauf, oder
b) als Getriebeeinrichtung oder als Teil einer Getriebeeinrichtung
ausgebildet ist.

4. Antrieb (3) nach einem der vorhergehenden Ansprüche, **dadurch gekennzeichnet, dass** die Überbrückungseinrichtung (11)
a) an der Freilaufeinrichtung (7) angeordnet, oder
b) in die Freilaufeinrichtung (7) integriert, oder
c) parallel zu der Freilaufeinrichtung (7) angeordnet
ist.

5. Antrieb (3) nach einem der vorhergehenden Ansprüche, **dadurch gekennzeichnet, dass** die Überbrückungseinrichtung (11) als Kupplung, insbesondere als Magnetkupplung, ausgebildet ist.

6. Wasserfahrzeug (1), mit einem Antrieb (3) nach einem der Ansprüche 1 bis 5, wobei die Antriebswelle (22)
a) eine Propellerwelle (9) des Wasserfahrzeugs (1) ist, oder wobei
b) die Antriebswelle (22) mit einer Propellerwelle (9) des Wasserfahrzeugs (1) antriebswirkverbindbar oder antriebswirkverbunden ist.

7. Wasserfahrzeug (1) nach Anspruch 6, **dadurch gekennzeichnet, dass** zwischen der Freilaufeinrichtung (7) und einem Propeller (13) des Wasserfahrzeugs (1) ein Schaltgetriebe (19) angeordnet ist, das eingerichtet ist, um eine Drehrichtung des Propellers (13) relativ zu einer Drehrichtung der Brennkraftmaschine (5) umzukehren, wenn das Schaltgetriebe (19) geschaltet wird.

8. Verfahren zum Betreiben eines Wasserfahrzeugs (1) nach einem der Ansprüche 6 oder 7, wobei bei einem Bremsmanöver zum Reduzieren der Drehzahl der Propellerwelle (9) die Überbrückungseinrichtung (11) geschlossen wird, wobei die Brennkraftmaschine (5) mit der Propellerwelle (9) gekoppelt und durch die Propellerwelle (9) geschleppt wird.

9. Verfahren nach Anspruch 8, **dadurch gekennzeichnet, dass** das Wasserfahrzeug (1) vor dem Bremsmanöver nur durch die Brennkraftmaschine (5) oder durch die elektrische Maschine (15) und die Brennkraftmaschine (5) gemeinsam angetrieben wird, wobei für das Bremsmanöver folgende Schritte durchgeführt werden:
a) Beenden einer Brennstoffzufuhr für die Brennkraftmaschine (5),
b) Schließen der Überbrückungseinrichtung (11);
c) Ansteuern der elektrischen Maschine (15) zum Verzögern der Propellerwelle (9).

10. Verfahren nach Anspruch 8, **dadurch gekennzeichnet, dass** das Wasserfahrzeug (1) vor dem Bremsmanöver nur durch die elektrische Maschine (15) angetrieben wird, wobei die Brennkraftmaschine (5) vorzugsweise gestoppt ist, wobei für das Bremsmanöver folgende Schritte durchgeführt werden:
a) Umsteuern der elektrischen Maschine (15) zum Verzögern der Propellerwelle (9), und
b) Schließen der Überbrückungseinrichtung (11).

11. Steuergerät (23) für ein Wasserfahrzeug (1), das eingerichtet ist zur Durchführung eines Verfahrens nach einem der Ansprüche 8 bis 10.

12. Wasserfahrzeug (1) nach einem der Ansprüche 6 und 7, mit einem Steuergerät (23) nach Anspruch 11, wobei das Steuergerät (23) mit der Überbrückungseinrichtung (11) wirkverbunden ist.

## Claims

1. Propulsion device (3) for a vehicle (2), in particular for a watercraft (1), with an internal combustion engine (5) und a freewheel device (7), wherein the internal combustion engine (3) can be connected in a drive-effective manner to a drive shaft (22) of the propulsion device (3) via the freewheel device (7), wherein the freewheel device (7) is adapted to decouple the internal combustion engine (5) from the drive shaft (22) when a rotational speed of the drive shaft (22) exceeds a rotational speed of the internal combustion engine (5), **characterised in that** the propulsion device comprises a bridging device (11) which is adapted to couple the internal combustion engine (5) to the drive shaft (22) in at least one operating situation of the propulsion device (3) when the internal combustion engine (5) is disconnected from the drive shaft (22) by the freewheel device (7).

2. Propulsion device (3) according to claim 1, **characterised in that** the propulsion device (3) additionally comprises an electric machine (15), wherein the internal combustion engine (5) and the electric machine (15) can be connected in a drive-effective manner to the drive shaft (22) via the freewheel device (7) in such a way that only the internal combustion engine (5), only the electric machine (15), or the internal combustion engine (5) and the electric machine (15) together can drive the drive shaft (22).

3. Propulsion device (3) according to one of the preceding claims, **characterised in that** the freewheel device (7) is designed
a) as a mechanical freewheel, or
b) as a gear device or as part of a gear device.

4. Propulsion device (3) according to one of the preceding claims, **characterised in that** the bridging device (11)
a) is arranged on the freewheel device (7), or
b) is integrated into the freewheel device (7), or
c) is arranged parallel to the freewheel device (7).

5. Propulsion device (3) according to one of the preceding claims, **characterised in that** the bridging device (11) is designed as a clutch, in particular as a magnetic clutch.

6. Watercraft (1) with a propulsion device (3) according to one of claims 1 to 5, wherein the drive shaft (22)
a) is a propeller shaft (9) of the watercraft (1), or wherein
b) the drive shaft (22) can be connected or is connected to a propeller shaft (9) of the watercraft (1) in a drive-effective manner.

7. Watercraft (1) according to claim 6, **characterised in that** a shift gearbox (19) is arranged between the freewheel device (7) and the propeller (13) of the watercraft (1), wherein the shift gearbox (19) is adapted to reverse a direction of rotation of the propeller (13) relative to a direction of rotation of the internal combustion engine (5) when the shift gearbox (19) is shifted.

8. Method for operating a watercraft (1) according to one of claims 6 or 7, wherein, during a braking manoeuvre to reduce a rotational speed of the propeller shaft (9), the bridging device (11) is closed, wherein the internal combustion engine (5) is coupled to the propeller shaft (9) and is towed by the propeller shaft (9).

9. Method according to claim 8, **characterised in that**, prior to the braking manoeuvre, the watercraft (1) is driven only by the internal combustion engine (5) or by the electric machine (15) and the internal combustion engine (5) together, wherein the following steps are performed for the braking manoeuvre:
a) stopping a fuel supply to the internal combustion engine (5),
b) closing the bridging device (11);
c) activating the electric machine (15) to decelerate the propeller shaft (9).

10. Method according to claim 8, **characterised in that**, prior to the braking manoeuvre, the watercraft (1) is driven only by the electric machine (15), wherein preferably the internal combustion engine (5) is stopped, wherein the following steps are performed for the braking manoeuvre:
a) reversing the electric machine (15) to decelerate the propeller shaft (9), and
b) closing the bridging device (11).

11. Control device (23) for a watercraft (1) which is adapted to carry out a method according to one of claims 8 to 10.

12. Watercraft (1) according to one of claims 6 and 7, with a control device (23) according to claim 11, wherein the control device (23) is operatively connected to the bridging device (11).

## Revendications

1. Entraînement (3) pour un véhicule (2), en particulier pour un véhicule aquatique (1), avec un moteur à combustion interne (5) et un dispositif de roue libre (7), dans lequel le moteur à combustion interne (5) peut être relié fonctionnellement par entraînement à un arbre d'entraînement (22) de l'entraînement (3) par l'intermédiaire du dispositif de roue libre (7), dans lequel le dispositif de roue libre (7) est conçu pour désaccoupler le moteur à combustion interne (5) de l'arbre d'entraînement (22) lorsqu'un régime de l'arbre d'entraînement (22) dépasse un régime du moteur à combustion interne (5), **caractérisé en ce que** l'entraînement comporte un dispositif de pontage (11), lequel est conçu pour accoupler le moteur à combustion interne (5), dans au moins une situation de fonctionnement de l'entraînement (3), à l'arbre d'entraînement (22) lorsque le moteur à combustion interne (5) est séparé de l'arbre d'entraînement (22) par le biais du dispositif de roue libre (7).

2. Entraînement (3) selon la revendication 1, **caractérisé en ce que** l'entraînement (3) comprend de plus un moteur électrique (15), dans lequel le moteur à combustion interne (5) et le moteur électrique (15) peuvent être reliés fonctionnellement par entraînement à l'arbre d'entraînement (22) par l'intermédiaire du dispositif de roue libre (7) de telle sorte que seul le moteur à combustion interne (5), seul le moteur électrique (15), ou le moteur à combustion interne (5) et le moteur électrique (15) conjointement puisse(nt) entraîner l'arbre d'entraînement (22).

3. Entraînement (3) selon l'une des revendications précédentes, **caractérisé en ce que** le dispositif de roue libre (7) est conçu
a) en tant que roue libre mécanique, ou
b) en tant que dispositif de transmission ou en tant que partie d'un dispositif de transmission.

4. Entraînement (3) selon l'une des revendications précédentes, **caractérisé en ce que** le dispositif de pontage (11) est
a) disposé au niveau du dispositif de roue libre (7), ou
b) intégré dans le dispositif de roue libre (7), ou
c) disposé parallèlement au dispositif de roue libre (7).

5. Entraînement (3) selon l'une des revendications précédentes, **caractérisé en ce que** le dispositif de pontage (11) est conçu en tant qu'accouplement, en particulier en tant qu'accouplement magnétique.

6. Véhicule aquatique (1), avec un entraînement (3) selon l'une des revendications 1 à 5, dans lequel l'arbre d'entraînement (22)
a) est un arbre d'hélice (9) du véhicule aquatique (1), ou dans lequel
b) l'arbre d'entraînement (22) peut être relié fonctionnellement par entraînement ou est relié fonctionnellement par entraînement à un arbre d'hélice (9) du véhicule aquatique (1).

7. Véhicule aquatique (1) selon la revendication 6, **caractérisé en ce que**, entre le dispositif de roue libre (7) et une hélice (13) du véhicule aquatique (1), est disposée une boîte de vitesses manuelle (19), laquelle est conçue pour inverser un sens de rotation de l'hélice (13) par rapport à un sens de rotation du moteur à combustion interne (5) lorsque la boîte de vitesses manuelle (19) est engagée.

8. Procédé pour le fonctionnement d'un véhicule aquatique (1) selon l'une des revendications 6 et 7, dans lequel, lors d'une manœuvre de freinage pour réduire le régime de l'arbre d'hélice (9), le dispositif de pontage (11) est fermé, dans lequel le moteur à combustion interne (5) est accouplé à l'arbre d'hélice (9) et emmené par le biais de l'arbre d'hélice (9).

9. Procédé selon la revendication 8, **caractérisé en ce que** le véhicule aquatique (1), avant la manœuvre de freinage, est entraîné seulement par le biais du moteur à combustion interne (5) ou par le biais du moteur électrique (15) et du moteur à combustion interne (5) conjointement, dans lequel, pour la manœuvre de freinage, les étapes suivantes sont mises en œuvre :
a) achèvement d'une alimentation en carburant pour le moteur à combustion interne (5),
b) fermeture du dispositif de pontage (11) ;
c) actionnement du moteur électrique (15) pour ralentir l'arbre d'hélice (9).

10. Procédé selon la revendication 8, **caractérisé en ce que** le véhicule aquatique (1), avant la manœuvre de freinage, est entraîné seulement par le biais du moteur électrique (15), dans lequel le moteur à combustion interne (5) est de préférence arrêté, dans lequel, pour la manœuvre de freinage, les étapes suivantes sont mises en œuvre :
a) commutation du moteur électrique (15) pour ralentir l'arbre d'hélice (9), et
b) fermeture du dispositif de pontage (11).

11. Appareil de commande (23) pour un véhicule aquatique (1), lequel est conçu pour la mise en œuvre d'un procédé selon l'une des revendications 8 à 10.

12. Véhicule aquatique (1) selon l'une des revendications 6 et 7, avec un appareil de commande (23) selon la revendication 11, dans lequel l'appareil de commande (23) est relié fonctionnellement au dispositif de pontage (11).
